# EUROPÄISCHE PATENTSCHRIFT

(11) **EP 3 727 831 B1**
(45) Veröffentlichungstag und Bekanntmachung des Hinweises auf die Patenterteilung: **16.06.2021**
(21) Anmeldenummer: 20707398.2
(22) Anmeldetag: 26.02.2020
(51) Int. Cl.: B31B 70/64, B31B 70/74, B31F 5/00, B65B 9/06

(54) **SCHLAUCHBEUTELMASCHINE ZUR HERSTELLUNG VON PAPIERBEUTELN**
TUBULAR BAG MACHINE FOR PRODUCING PAPER BAGS
ENSACHEUSE DESTINÉE À FABRIQUER DES SACHETS EN PAPIER

(30) Priorität: 01.03.2019 DE 102019202847
(43) Veröffentlichungstag der Anmeldung: 28.10.2020
(73) Patentinhaber: Syntegon Technology GmbH, 71332 Waiblingen (DE)
(72) Erfinder: WIEDUWILT, Ulrich, 73529 Schwaebisch Gmuend (DE)
(74) Vertreter: DREISS Patentanwälte PartG mbB
(86) Internationale Anmeldenummer: PCT/EP2020/054961
(87) Internationale Veröffentlichungsnummer: WO 2020/178086

(56) Entgegenhaltungen:
- WO-A1-99/25547
- DE-A1-102009 053 415
- DE-A1-102013 225 743
- DE-B- 1 156 303

## Beschreibung

### Stand der Technik

Die vorliegende Erfindung betrifft eine Schlauchbeutelmaschine zur Herstellung von Schlauchbeuteln aus Papier, wobei die Schlauchbeutel ohne zusätzlichen Klebstoff oder thermoplastisches Kunstharz oder dergleichen hergestellt werden können und somit voll recycelbar sind.

Aus der EP 0 340 334 A2 ist eine Vorrichtung bekannt, welche Papiererzeugnisse mittels Ultraschalls fügt. Hierbei weist das verwendete Papier eine thermoplastische Beschichtung auf. Diese thermoplastische Beschichtung wird während des Fügevorgangs angeschmolzen. Nach Abkühlen und Aushärten sind dann die Fügebereiche der Papierlagen miteinander verbunden. Ferner ist aus der DE 10 2013 225 745 A1 ein Ultraschallfügeverfahren zum Verbinden von Papiermaterial bekannt, bei dem ein Ultraschallreibschweißen ausgeführt wird. Diese bekannten Verfahren haben sich grundsätzlich bewährt, es besteht jedoch ein dringender Bedarf, insbesondere aufgrund von verschärften Umweltvorschriften, dass beispielsweise Verpackungen vollständig aus Papiermaterial hergestellt werden, welches recycelbar ist und keine weiteren Zusatzinhaltsstoffe, insbesondere Kunststoffe oder Klebstoffe oder dergleichen, aus welchen Umweltbelastungen resultieren können, enthält.

Aus der WO 99/25547 und aus der DE 10 2013 225 743 A1 sind Verfahren zum Ultraschallfügen von zwei befeuchteten Papierbahnen bekannt. Ein weiteres Ultraschallfügeverfahren ist aus der DE 1 156 303 B bekannt. Aus der DE 10 2009 053 415 A1 sind ein Verfahren und eine Vorrichtung zur Herstellung von Schlauchbeuteln bekannt.

### Offenbarung der Erfindung

Die erfindungsgemäße Schlauchbeutelmaschine mit den Merkmalen des Anspruchs 1. weist demgegenüber den Vorteil auf, dass Schlauchbeutel aus einer unendlichen Papierbahn hergestellt werden können, ohne dass hierzu zusätzlicher Klebstoff benötigt wird oder die Papierbahn mit beispielsweise einem thermoplastischen Kunststoff oder dergleichen beschichtet ist. Erfindungsgemäß können die Schlauchbeutel aus unbehandeltem Papier hergestellt werden. Dadurch ist es möglich, vollständig recycelbare Verpackungen für Güter, insbesondere Lebensmittel oder dergleichen, bereitzustellen. Zusätzlich ergibt sich noch der herstellungsbedingte Vorteil, dass keinerlei Klebstoff oder beschichtetes Papier oder dergleichen verwendet werden muss, was die Herstellung unnötig verteuern würde. Weiterhin kann sichergestellt werden, dass, da kein Klebstoff oder dergleichen verwendet wird, ein Reinigungsprozess der Schlauchbeutelmaschine sehr einfach und sicher durchgeführt werden kann.

Dies wird erfindungsgemäß dadurch erreicht, dass die Schlauchbeutelmaschine eine Abzugsstation zum Abziehen der Papierbahn, eine Aufraustation zum Aufrauen wenigstens eines Fügebereichs auf der Papierbahn und eine Befeuchtungsstation zum Befeuchten wenigstens eines Fügebereichs auf der Papierbahn umfasst. Ferner ist eine Formstation zum Formen eines Beutelschlauchs vorgesehen, sowie eine Ultraschall-Siegelstation zum Siegeln des Fügebereichs. Somit wird erfindungsgemäß die Papierbahn abgezogen und in der Aufraustation an dem Fügebereich aufgeraut. Wenn beispielsweise ein Längssiegelvorgang des Beutelschlauchs vorgenommen werden soll, erfolgt die Aufrauhung an einem Rand der Papierbahn. Anschließend wird der aufgeraute Fügebereich in der Befeuchtungsstation befeuchtet. Hierbei sei angemerkt, dass die Reihenfolge auch umgekehrt werden kann, d. h., dass zuerst der Fügebereich befeuchtet wird und anschließend in der Aufraustation aufgeraut wird. In der Formstation wird dann in bekannter Weise, beispielsweise über eine Formschulter oder einen Formschuh, ein Beutelschlauch geformt und eine Längsnaht in der Ultraschall-Siegelstation mit Ultraschall gesiegelt. Durch das Aufrauen und Anfeuchten des Fügebereichs des Papiers ist hierbei kein zusätzlicher Klebstoff oder dergleichen notwendig. Auch muss keine Beschichtung des Papiers beispielsweise mit Thermoplast vorgesehen werden. Durch das Aufrauen wird die Oberfläche des Fügebereichs vergrößert. Das Befeuchten vor dem Ultraschall-Siegelvorgang stellt dabei sicher, dass Feuchtigkeit im aufgerauchten Fügebereich vorhanden ist, sodass im Siegelschritt dann auch Wasserstoffbrücken zwischen den Fügebereichen entstehen und so eine Fügenaht mit hoher Dichtigkeit und Festigkeit ohne zusätzliches Siegelmedium erreicht wird. Versuche habe hierbei ergeben, dass die erzeugte Naht an den Papierbeuteln sehr fest ist und bei äußerer Krafteinwirkung die Naht länger hält als der eigentliche Papierpackstoff, d. h., dass der Beutel vorher reißt, bevor die Naht reißt.

Die Unteransprüche zeigen bevorzugte Weiterbildungen der Erfindung.

Die Ultraschall-Siegelstation ist vorzugsweise eine Ultraschall-Reibschweiß-Siegelstation. Hierbei erfolgt der Siegelvorgang mittels Reibschweißens und nicht wie im Stand der Technik üblicherweise mittels hämmernder Ultraschallbewegung. Hierbei kann durch den Reibschweißvorgang mehr Wärme in den Fügebereich eingebracht werden, wodurch der Siegelvorgang in kürzerer Zeit durchgeführt werden kann und insbesondere die vor dem Siegelschritt eingebrachte Feuchtigkeit im Wesentlichen vollständig entfernt werden kann.

Ein besonders einfacher Aufbau der Ultraschall-Siegelstation wird erreicht, wenn die Ultraschall-Siegelstation eine Sonotrode und einen Amboss aufweist, wobei eine Bewegungsrichtung der Sonotrode und des Ambosses zueinander nicht parallel ist. Der Amboss ist dabei vorzugsweise ein Drehamboss und rotiert um eine Achse. Dadurch kann ein kontinuierlicher Fügevorgang in der Reibschweiß-Siegelstation ausgeführt werden. Die Bewegungsrichtung der Sonotrode ist vorzugsweise parallel zur Mittelachse des Drehambosses, und insbesondere senkrecht zur Kraftrichtung des Drehambosses.

Weiter bevorzugt ist in Durchlaufrichtung der Papierbahn durch die Schlauchbeutelmaschine die Aufraustation vor der Befeuchtungsstation angeordnet. Somit erfolgt zuerst ein Aufrauen des Fügebereichs und anschließend eine Befeuchtung. Durch die Vergrößerung der Oberfläche des Fügebereichs durch den Aufrauschritt kann somit mehr Feuchtigkeit im Fügebereich aufgenommen werden.

Gemäß einer weiteren bevorzugten Ausführungsgestaltung der Erfindung ist die Befeuchtungsstation derart eingerichtet, dass ausschließlich der aufgeraute Fügebereich befeuchtet wird. Hierdurch wird vermieden, dass andere Bereiche der Papierbahn befeuchtet werden, was beim Durchlaufen der Papierbahn durch die Schlauchbeutelmaschine zu einem Reißen des Papieres führen könnte.

Vorzugsweise ist eine Flächenpressung in der Ultraschall-Siegelstation in einem Bereich von 20 bis 50 MPa, insbesondere 30 bis 40 MPa. Weiter bevorzugt ist die Flächenpressung einstellbar, insbesondere in Abhängigkeit einer Papierdicke.

Die Ultraschall-Siegelstation ist vorzugsweise eine Längssiegelstation. Bevorzugt umfasst die Ultraschall-Siegelstation zusätzlich noch eine Quersiegelstation. Vorzugsweise wird hierbei zur Erzeugung der Längsnaht und der Quernaht das erfindungsgemäße Siegelverfahren mit vorhergehendem Aufrauen und Befeuchten und anschließendem Reibschweißsiegeln mittels Ultraschalls durchgeführt.

### Kurze Beschreibung der Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische Darstellung einer Schlauchbeutelmaschine gemäß einem bevorzugten Ausführungsbeispiel der Erfindung und
- Figur 2: eine schematische, perspektivische Darstellung einer Ultraschall-Siegelstation von Figur 1.

### Bevorzugte Ausführungsform der Erfindung

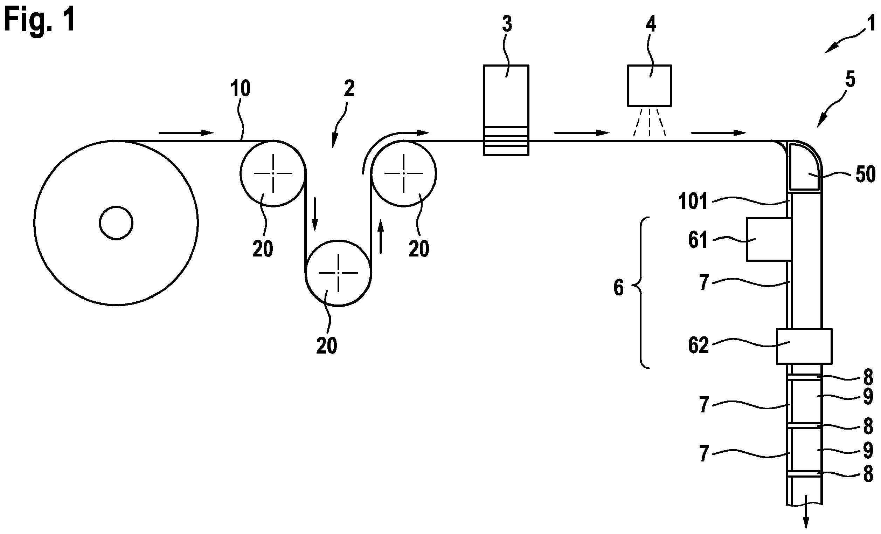

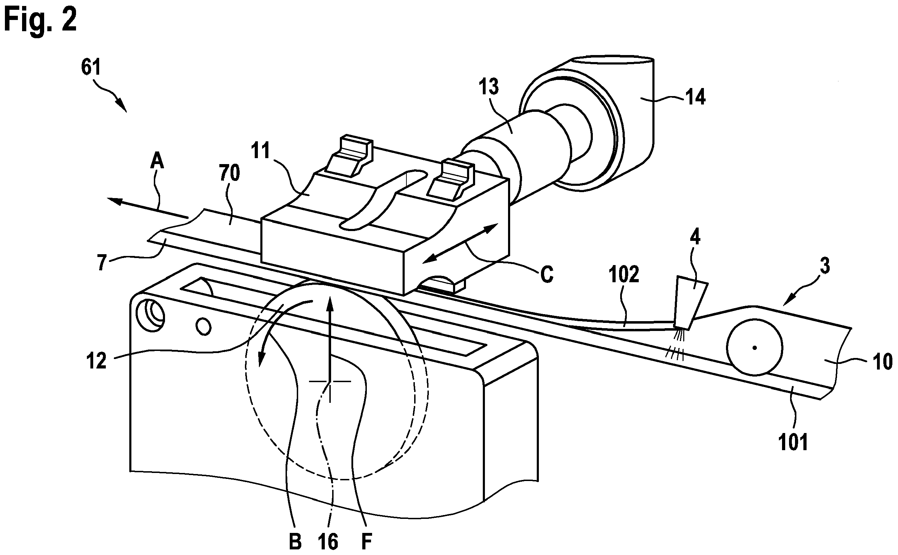

Nachfolgend wird unter Bezugnahme auf die Figuren 1 und 2 eine Schlauchbeutelmaschine 1 gemäß einem bevorzugten Ausführungsbeispiel der Erfindung im Detail beschrieben.

Figur 1 gibt schematisch eine Übersicht über die erfindungsgemäße Schlauchbeutelmaschine 1. Die Schlauchbeutelmaschine 1 umfasst eine Abzugsstation 2, an welcher eine Papierbahn 10 von einer großen Rolle mittels einer Abzugsvorrichtung in Form von angetriebenen Rollen 20, abgezogen wird.

Die Papierbahn 10 wird dann einer Aufraustation 3 zugeführt, an welcher ein Fügebereich 101 auf der Papierbahn aufgeraut wird. In diesem Ausführungsbeispiel raut die Aufraustation 3 hierbei einen Randbereich an einer Längsseite der Papierbahn auf, um später eine Längsnaht 7 zu siegeln und zusätzlich auch noch Querbereiche senkrecht zum Randbereich, um eine Quernaht 8 zu siegeln. Hierbei erfolgt ein kontinuierliches Aufrauen an dem längsseitigen Fügebereich. Die Querbereiche werden abschnittsweise entsprechend der Beutelgröße aufgeraut.

In einem nächsten Schritt wird die mit den aufgerauchten Fügebereichen versehene Papierbahn 10 zu einer Befeuchtungsstation 4 zugeführt. An der Befeuchtungsstation 4 werden die aufgerauten Fügebereiche befeuchtet. Hierbei sei angemerkt, dass nur genau der Fügebereich 101 befeuchtet wird und nicht die restliche, nicht aufgeraute Papierbahn, um ein Reißen während des Weitertransports der Papierbahn zu vermeiden.

Im nächsten Schritt wird Papierbahn 10 einer Formstation 5 mit einer Formschulter 50 zugeführt, an welcher ein Beutelschlauch geformt wird.

Anschließend wird der noch nicht gesiegelte Beutelschlauch zu einer Ultraschall-Siegelstation 6 zugeführt.

Wie aus Figur 1 ersichtlich ist, umfasst die Ultraschall-Siegelstation 6 eine Längssiegelstation 61 und eine Quersiegelstation 62. In Bewegungsrichtung der Papierbahn 10 ist dabei die Quersiegelstation 62 nach der Längssiegelstation 61 angeordnet.

In der Längssiegelstation 61 wird der aufgeraute und befeuchtete Fügebereich 101 am Rand zu einer Längsnaht 7 gesiegelt. Hierdurch entsteht ein geschlossener Schlauchbeutel 70. Dieser wird dann der Quersiegelstation 62 zugeführt, in welcher eine Quernaht 8 senkrecht zur Längsnaht 7 gesiegelt wird. Hierbei bildet die Quernaht 8 in bekannter Weise sowohl eine Fußnaht, als auch eine Kopfnaht eines Schlauchbeutels 9. Anschließend kann ein Befüllen über die Formschulter oder ein Füll- und Formrohr, erfolgen und die Papierbahn um einen Schritt weitergeführt werden, um die nächste Quernaht 8 zu siegeln.

Die Längssiegelstation 61 ist im Detail aus Figur 2 ersichtlich.

Die Längssiegelstation 61 umfasst eine Sonotrode 11, einen Drehamboss 12, einen Konverter 13 und einen Ultraschallerzeuger 14. Wie aus Figur 2 ersichtlich ist, dreht sich der Drehamboss 12 um eine Achse 16 in Förderrichtung A der Papierbahn 10, was in Figur 2 durch den Pfeil B angedeutet ist. Die Ultraschall-Sonotrode 11 wird hin- und hergehend senkrecht zur Bewegungsrichtung A bewegt, was in Figur 2 durch den Doppelpfeil C angedeutet ist.

Der Drehamboss 12 stellt ferner eine Fügekraft in Richtung des Pfeils F bereit, welche ebenfalls senkrecht zur Bewegungsrichtung C der Sonotrode 11 ist. Durch diese Ausgestaltung ist ein Reibschweißen am Fügebereich der Papierbahn 10 möglich, wodurch ein hoher Wärmeeintrag in den Fügebereich erreicht wird. Da durch das Aufrauen des Fügebereichs die Oberfläche des Fügebereichs vergrößert wird, kann beim Befeuchtungsschritt eine größere Feuchtigkeit in den Fügebereich eingebracht werden. Dadurch können verstärkende Wasserstoffbindungen im Fügebereich in der Ultraschall-Siegelstation durch den Reibschweißvorgang erreicht werden.

In Figur 2 ist die Papierbahn 10 nur schematisch dargestellt, wobei in diesem Ausführungsbeispiel lediglich ein Fügebereich 101 am Randbereich der Papierbahn 10 mittels Aufrauen und Befeuchten bearbeitet wurde. Der zweite Randbereich der Papierbahn 10, welcher der zweite Fügebereich 102 ist und mit dem bearbeiteten Fügebereich in der Ultraschall-Siegelstation 6 zusammengefügt wird, ist unbearbeitet.

Somit kann ein Schlauchbeutel 70 aus Papier hergestellt werden, wobei für den Siegelvorgang kein zusätzlicher Leim notwendig ist und auch keine thermoplastische Beschichtung oder dergleichen oder eine thermoplastische Folie in den Fügebereich eingefügt werden muss. Die Verbindung zwischen den Fügebereichen der Papierbahn 10 kann ausschließlich durch den Ultraschall-Fügevorgang des aufgerauten und befeuchteten Fügebereichs erreicht werden.

Es sei angemerkt, dass die Schlauchbeutelmaschine 1 beispielsweise auch derart aufgebaut werden kann, dass nur der erste Fügebereich 101 am Randbereich der Papierbahn 10 aufgeraut wird und der zweite Fügebereich 102 am gegenüberliegenden Randbereich der Papierbahn 10 nur befeuchtet wird und die beiden Fügebereiche dann in der Ultraschall-Siegelstation 6 zusammengefügt werden. Weiter alternativ können sowohl der erste als auch der zweite Fügebereich beide jeweils aufgeraut und befeuchtet werden. Ferner wäre es auch denkbar, dass beide Fügebereiche aufgeraut werden und nur ein Fügebereich anschließend befeuchtet wird. Darüber hinaus ist es auch möglich, dass zuerst eine Befeuchtung des Fügebereichs und anschließend erst die Aufrauhung erfolgt, wobei hier beim Aufrauvorgang reduzierte Kräfte eingesetzt werden müssen, um ein Reißen des befeuchteten Fügebereichs zu vermeiden.

## Patentansprüche

1. Schlauchbeutelmaschine zur Herstellung von Schlauchbeutelverpackungen aus Papier, umfassend:
- eine Abzugsstation (2) zum Abziehen einer Papierbahn (10),
- eine Aufraustation (3) zum kontinuierlichen Aufrauen wenigstens eines Fügebereichs der Papierbahn (10),
- eine Befeuchtungsstation (4) zum Befeuchten wenigstens eines Fügebereichs der Papierbahn (10),
- eine Formstation (5) zum Formen eines Beutelschlauchs und
- eine Ultraschall-Siegelstation (6) zum Siegeln des Fügebereichs der Papierbahn (10).

2. Schlauchbeutelmaschine nach Anspruch 1, wobei die Ultraschall-Siegelstation (6) eine Ultraschall-Reibschweiß-Siegelstation ist und einen Fügevorgang mittels Reibschweißens durchführt.

3. Schlauchbeutelmaschine nach Anspruch 2, wobei die Ultraschall-Reibschweiß-Siegelstation eine Sonotrode (11) und einen Amboss (12) aufweist, wobei der Fügebereich zwischen Sonotrode und Amboss geführt ist und wobei eine Bewegungsrichtung von Sonotrode und Amboss nicht parallel ist.

4. Schlauchbeutelmaschine nach Anspruch 3, wobei der Amboss ein Drehamboss ist und insbesondere in Bewegungsrichtung (A) der Papierbahn (10) rotiert.

5. Schlauchbeutelmaschine nach einem der vorhergehenden Ansprüche, wobei in Bewegungsrichtung (A) der Papierbahn (10) die Aufraustation (3) vor der Befeuchtungsstation (4) angeordnet ist.

6. Schlauchbeutelmaschine nach einem der vorhergehenden Ansprüche, wobei die Befeuchtungsstation (4) eingerichtet ist, ausschließlich den aufgerauten Fügebereich an der Papierbahn (10) zu befeuchten.

7. Schlauchbeutelmaschine nach einem der vorhergehenden Ansprüche, wobei die Ultraschall-Siegelstation (6) beim Siegelvorgang eine Flächenpressung in einem Bereich von 20 bis 50 MPa, insbesondere 30 bis 40 MPa, bereitstellt.

8. Schlauchbeutelmaschine nach einem der vorhergehenden Ansprüche, wobei die Ultraschall-Siegelstation (6) eine Längssiegelstation (61) und/oder eine Quersiegelstation (62) umfasst.

## Claims

1. Flow bag machine for producing flow bag packaging made from paper, comprising:
- a removal station (2) for removing a paper web (10),
- a grinding station (3) for continuous grinding of at least one joining portion of the paper web (10),
- a dampening station (4) for dampening at least one joining portion of the paper web (10),
- a shaping station (5) for shaping a bag tube and
- an ultrasonic sealing station (6) for sealing the joining portion of the paper web (10).

2. Flow bag machine as per claim 1, whereby the ultrasonic sealing station (6) is an ultrasonic friction welding sealing station and uses friction welding for joining.

3. Flow bag machine as per claim 2, whereby the ultrasonic friction welding sealing station comprises a sonotrode (11) and an anvil (12), whereby the joining portion is guided between the sonotrode and anvil and whereby a direction of movement of the sonotrode and anvil is not parellel.

4. Flow bag machine as per claim 3, whereby the anvil is a rotating anvil that rotates in the direction of movement (A) of the paper web (10).

5. Flow bag machine as per one of the preceding claims, whereby the grinding station (3) is placed before the dampening station (4) in the direction of movement (A) of the paper web (10).

6. Flow bag machine as per one of the preceding claims, whereby the dampening station (4) is solely set up to dampen the ground joining portion of the paper web (10).

7. Flow bag machine as per one of the preceding claims, whereby the ultrasonic sealing station (6) applies a contact pressure in the range of 20 to 50 MPa, in particular 30 to 40 MPa, during the sealing process.

8. Flow bag machine as per one of the preceding claims, whereby the ultrasonic sealing station (6) comprises a lengthwise sealing station (61) and/or a crosswise sealing station (62).

## Revendications

1. Machine pour sachets tubulaires pour fabriquer des emballages formant sachets tubulaires en papier, comprenant :
- un poste d'extraction (2) pour extraire une bande de papier (10),
- un poste de rugosification (3) pour rugosifier en continu au moins une zone d'assemblage de la bande de papier (10),
- un poste d'humidification (4) pour humidifier au moins une zone d'assemblage de la bande de papier (10) ,
- un poste de formage (5) pour former un sachet tubulaire et
- un poste de scellement par ultrasons (6) pour sceller la zone d'assemblage de la bande de papier (10) .

2. Machine pour sachets tubulaires selon la revendication 1, dans laquelle le poste de scellement par ultrasons (6) est un poste de scellement à soudage par friction par ultrasons et effectue un processus d'assemblage au moyen d'un soudage par friction.

3. Machine pour sachets tubulaires selon la revendication 2, dans laquelle le poste de scellement à soudage par friction par ultrasons présente une sonotrode (11) et une enclume (12), dans laquelle la zone d'assemblage est guidée entre la sonotrode et l'enclume et dans laquelle un sens de mouvement de la sonotrode et de l'enclume n'est pas parallèle.

4. Machine pour sachets tubulaires selon la revendication 3, dans laquelle l'enclume est une enclume rotative et tourne en particulier dans le sens de mouvement (A) de la bande de papier (10).

5. Machine pour sachets tubulaires selon l'une quelconque des revendications précédentes, dans laquelle le poste de rugosification (3) est disposé devant le poste d'humidification (4) dans le sens de mouvement (A) de la bande de papier (10).

6. Machine pour sachets tubulaires selon l'une quelconque des revendications précédentes, dans laquelle le poste d'humidification (4) est conçu pour humidifier exclusivement la zone d'assemblage rugosifiée sur la bande de papier (10).

7. Machine pour sachets tubulaires selon l'une quelconque des revendications précédentes, dans laquelle le poste de scellement par ultrasons (6) fournit lors du processus de scellement une pression superficielle dans une plage de 20 à 50 MPa, en particulier 30 à 40 MPa.

8. Machine pour sachets tubulaires selon l'une quelconque des revendications précédentes, dans laquelle le poste de scellement par ultrasons (6) comprend un poste de scellement longitudinal (61) et/ou un poste de scellement transversal (62).
